# EUROPÄISCHE PATENTSCHRIFT

(11) **EP 3 569 924 B1**
(45) Veröffentlichungstag und Bekanntmachung des Hinweises auf die Patenterteilung: **03.04.2024**
(21) Anmeldenummer: 19172999.5
(22) Anmeldetag: 07.05.2019
(51) Int. Cl.: F21S 45/10, B60Q 1/115

(54) **SCHEINWERFER FÜR EIN KRAFTFAHRZEUG**
HEADLAMP FOR A MOTOR VEHICLE
PHARE POUR VÉHICULE AUTOMOBILE

(30) Priorität: 14.05.2018 DE 102018111414
(43) Veröffentlichungstag der Anmeldung: 20.11.2019
(73) Patentinhaber: Marelli Automotive Lighting Reutlingen (Germany) GmbH, 72762 Reutlingen (DE)
(72) Erfinder: Wagner, Daniel, 72770 Reutlingen (DE); Müller, Marcus, 72800 Eningen (DE)
(74) Vertreter: DREISS Patentanwälte PartG mbB

(56) Entgegenhaltungen:
- EP-A2- 2 280 221
- EP-A2- 2 719 579
- DE-A1-102009 035 565
- DE-A1-102011 000 735
- DE-A1-102011 003 910
- DE-A1-102012 111 311

## Beschreibung

Die Erfindung betrifft einen Scheinwerfer für ein Kraftfahrzeug.

EP 2 719 579 A2 betrifft bereits einen Scheinwerfer gemäß dem Oberbegriff von Anspruch 1. Aus Es ist bekannt, dass Scheinwerfer mittels geeigneter Materialauswahl und mechanischer Auslegung derart konstruiert werden, um die zu erwartenden Auswirkungen eines Einflusses der Temperatur so gering wie möglich zu halten.

Auch ist bekannt, dass der Trend zu immer höher auflösenden Scheinwerfern geht, womit die Hell-Dunkel-Grenze bei einer Abblendlichtverteilung deutlicher hervortritt.

In DE 10 2012 111311 A1 ist ein Thermokompensationsabschnitt offenbart, der einen Längendehnungsabschnitt bildet, der sich bei Änderung der Temperatur in einer Kompensationslänge ändern kann.

DE 10 2011 003910 A1 betrifft einen Scheinwerfer eines Kraftfahrzeugs mit zwei Lageranordnungen, die eine Drehachse bilden, um die eine Komponente oder eine Baugruppe des Scheinwerfers schwenkbar ist. Dabei ist die drehbare Lagerung eines Lichtmoduls zur Realisierung einer Leuchtweitenregelung, eines dynamischen Kurvenlichts und/oder eines Teilfernlichts erforderlich. Die Lageranordnung ist zwischen einem Halterahmen des Lichtmoduls und einem Scheinwerfergehäuse ausgebildet.

DE 10 2011 000735 A1 betrifft einen Wärmeausdehnungskompensator und einen Scheinwerfer.

EP 2 280 221 A2 offenbart einen Scheinwerfer für ein Kraftfahrzeug mit einem Gehäuse, in dem wenigstens ein Lichtmodul in einer vorgegebenen Lage aufgenommen ist. Das Lichtmodul ist über Aufnahmemittel im Gehäuse des Scheinwerfers angeordnet. Das Gehäuse weist zumindest einen Befestigungspunkt auf, in dem das Gehäuse mit einem Rahmenelement des Kraftfahrzeugs verbunden ist.

DE 10 2009 035565 A1 betrifft einen Scheinwerfer für ein Kraftfahrzeug mit einem Gehäuse, in dem ein Lichtmodul in einer vorgegebenen Lage aufgenommen ist. Die Aufnahme des Lichtmoduls weist ein Ausgleichselement zum Ausgleich von thermisch bedingten Abweichungen der Lage des Lichtmoduls von der vorgegebenen Lage im Scheinwerfer auf.

Aus der DE 10 2012 219 032 A1 ist eine Leuchtweitenregelung bekannt.

Es ist also Aufgabe der Erfindung, hohe Anforderungen an die Lagestabilität der Abstrahllichtverteilung auch bei unterschiedlichen Temperaturen zu erfüllen.

Die Aufgabe wird durch einen Scheinwerfer nach dem Anspruch 1 gelöst. Vorteilhafte Ausführungsformen finden sich in den Unteransprüchen sowie in der nachfolgenden Beschreibung.

Die Lagestabilität der Abstrahllichtverteilung ist im Konstruktionsprozess des Scheinwerfers nicht in voller Gänze vorhersagbar. Folglich bietet der bereitgestellte Scheinwerfer die Möglichkeit, durch die Anpassung der Kompensationsvorrichtung die sehr produktspezifischen temperaturabhängigen Lageänderungen der Abstrahllichtverteilung zumindest zu einem Teil durch die temperaturabhängige Korrektur der Rotationsposition zu kompensieren.

Vorteilhaft wird durch den bereitgestellten Scheinwerfer die Lagestabilität der Abstrahllichtverteilung auch bei unterschiedlichen Temperaturen gewährleistet. Dies wird durch eine einfache mechanische Wirkkette der Leuchtweiteneinstellvorrichtung erreicht. Eine elektronische Nachstellung des Antriebs in Abhängigkeit von einer gemessenen Temperatur kann somit entfallen.

Die gesetzlich vorgeschriebene Einhaltung der Lage der Hell-Dunkel-Grenze in einer abgestrahlten Abblendlichtverteilung wird folglich verbessert.

Mithin wird eine kostengünstige und konstruktiv einfache Möglichkeit geschaffen, um die Lagestabilität der Abstrahllichtverteilung eines Lichtmoduls auch bei unterschiedlichen Temperaturen zu gewährleisten.

Eine vorteilhafte Ausführungsform zeichnet sich dadurch aus, dass die Kompensationsvorrichtung in einem Kraftübertragungsabschnitt zwischen dem Lichtmodulrahmen und dem Antrieb angeordnet ist. Vorteilhaft wird damit die Anordnung des Antriebs im Scheinwerfer von der Funktion der Kompensationsvorrichtung entkoppelt. Der Kraftübertragungsabschnitt umfasst damit die Korrekturfunktion der Kompensationsvorrichtung.

Die Kompensationsvorrichtung umfasst: einen ersten Kompensationsabschnitt mit einem ersten Temperaturausdehnungskoeffizienten, und einen zweiten Kompensationsabschnitt mit einem zweiten von dem ersten Temperaturausdehnungskoeffizienten unterschiedlichen Temperaturausdehnungskoeffizienten. Vorteilhaft werden unterschiedliche Temperaturausdehnungskoeffizienten des Materials bzw. der Materialzusammensetzung der Kompensationsabschnitte dazu genutzt um die temperaturbedingte Lageänderung der Abstrahllichtverteilung zu kompensieren.

Ein distaler Verbindungsabschnitt verbindet den ersten und den zweiten Kompensationsabschnitt miteinander. Durch das Vorsehen des distalen Verbindungsabschnitts werden zwei wirksame temperaturabhängige Längenausdehnungen der Verbindungsabschnitte miteinander gekoppelt und die Temperaturkompensation unter Ausnutzung eines geringen Bauraumvolumens erreicht.

Eine vorteilhafte Ausführungsform zeichnet sich dadurch aus, dass der erste und der zweite Kompensationsabschnitt entlang einer Mittenlängsachse der Kompensationsvorrichtung zueinander korrespondierende Bereiche zur Herstellung des distalen Verbindungsabschnitts aufweisen. Vorteilhaft kann damit zum Ende einer Temperaturauslegung des Scheinwerfertyps der distale Verbindungsabschnitt unter Berücksichtigung der unterschiedlichen entlang der Mittenlängsachse wirksamen temperaturabhängigen Längenausdehnungen ausgewählt werden.

Eine vorteilhafte Ausführungsform zeichnet sich dadurch aus, dass ein erster proximaler Verbindungsabschnitt den ersten Kompensationsabschnitt mit dem Antrieb verbindet, und wobei ein zweiter proximaler Verbindungsabschnitt den zweiten Kompensationsabschnitt mit dem Lichtmodulrahmen verbindet. Vorteilhaft wird mit den proximalen Verbindungsabschnitten eine konstruktiv einfache Anordnung geschaffen.

Der erste und/oder der zweite Kompensationsabschnitt weisen Unterabschnitte mit voneinander unterschiedlichen Temperaturausdehnungskoeffizienten auf. Vorteilhaft kann beispielsweise einer der Unterabschnitte nach Art eines Baukastensystems austauschbar gestaltet werden, um für den jeweiligen Scheinwerfertyp eine passende Temperaturkompensation bereitzustellen.

Eine vorteilhafte Ausführungsform zeichnet sich dadurch aus, dass eine gedachte Mittenlängsachse der Kompensationsvorrichtung zumindest abschnittsweise entlang einer gedachten Tangente verläuft, wobei die gedachte Tangente eine gedachte Kreiszylindermantelfläche mit der Leuchtweitenachse als Zylinderachse berührt. Vorteilhaft werden damit die unterschiedlichen Temperaturausdehnungskoeffizienten und deren Auswirkung auf die Einstellung der Abstrahllichtverteilung bauraumsparend ausgenutzt.

Weitere Merkmale und Vorteile sind in der nachfolgenden Beschreibung der Zeichnung erläutert. In der Zeichnung zeigen:
- Figur 1: einen Scheinwerfer in schematischer Form;
- Figur 2: eine Kompensationsvorrichtung in schematischer Form;
- Figur 3: den Scheinwerfer in eine Fronansicht; und
- Figur 4, 5 und 6: jeweils einen schematischen Schnitt einer Kompensationsvorrichtung, wobei Fig. 6 die erfindungsgemäße Unterabschnitte zeigt.

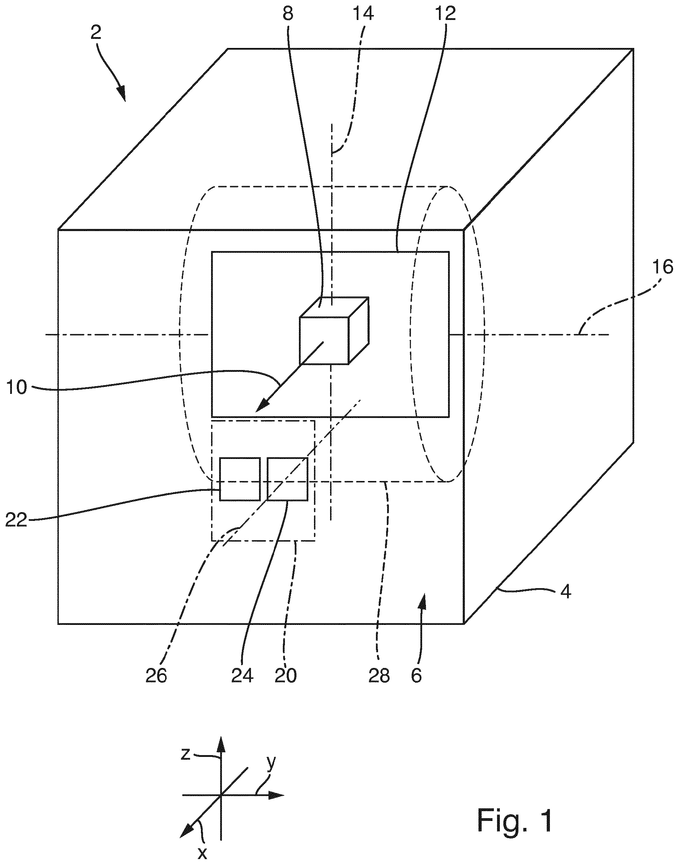

Figur 1 zeigt in schematischer Form einen Scheinwerfer 2 für ein Kraftfahrzeug. Der Scheinwerfer 2 umfasst ein Scheinwerfergehäuse 4, dessen Lichtaustrittsöffnung mit einer Abdeckscheibe 6 verschlossen ist. Innerhalb des Scheinwerfergehäuses 4 ist ein Lichtmodul 8 angeordnet, welches zur Abstrahlung einer Abstrahllichtverteilung 10 in Fahrtrichtung x ausgebildet ist. Insbesondere ist das Lichtmodul 8 ein Abblendlichtmodul, dessen Abblendlichtverteilung eine auf einem Messschirm sich deutlich abzeichnende Hell-Dunkel-Grenze umfasst. Das Lichtmodul 8 ist in einem Lichtmodulrahmen 12 angeordnet, wobei sowohl eine starre Ausführung der Verbindung zwischen Lichtmodul 8 und Lichtmodulrahmen 12 vorgesehen sein kann als auch alternativ eine Rotierbarkeit des Lichtmoduls 8 um eine Kurvenlichtachse 14 vorgesehen sein kann. Der Lichtmodulrahmen 12 wiederum ist um eine Leuchtweitenachse 16 rotierbar zu dem Scheinwerfergehäuse 4 festgelegt. Durch die Rotation um die Leuchtweitenachse 16 wird die Leuchtweite der Abstrahllichtverteilung 10 eingestellt. Insbesondere eine vertikale Position der Hell-Dunkel-Grenze der Abstrahllichtverteilung 10 wird durch eine Rotation um die Leuchtweitenachse 16 eingestellt.

Eine Leuchtweiteneinstellvorrichtung 20 ist zwischen dem Scheinwerfergehäuse 4 und dem um die Leuchtweitenachse 16 rotierbaren Lichtmodulrahmen 12 angeordnet. Die Leuchtweiteneinstellvorrichtung 20 umfasst einen Antrieb 22 und eine Kompensationsvorrichtung 24. Der Antrieb 22 ist beispielsweise ein Elektromotor und wird mittels eines Steuersignals so angetrieben, dass über ein Getriebe eine Rotationsposition des Lichtmodulrahmens 12 um die Leuchtweitenachse 16 eingestellt wird. In der jeweiligen Rotationsposition kompensiert die Kompensationsvorrichtung 24 zumindest teilweise temperaturbedingte Lageveränderungen des Lichtmoduls 8 und damit auch temperaturbedingte vertikale Lageveränderungen der vom Scheinwerfer 2 abgestrahlten Abstrahllichtverteilung 10. Die temperaturbedingten Lageveränderungen des Lichtmoduls 8 sind durch die Geometrien, Materialien und deren Zusammenspiel in der Wirkkette zwischen Lichtmodulrahmen 12 und Lichtmodul 8 bzw. dessen Einzelkomponenten bedingt.

Die Kompensationsvorrichtung 24 weist eine gedachte Mittenlängsachse 26 auf, welche mit einer gedachten Tangente eines gedachten Kreiszylindermantels 28 zusammenfällt, wobei der Kreiszylindermantel 28 eine gedachte Zylinderachse aufweist, welche mit der Leuchtweitenachse 16 zusammenfällt. Beispielsweise verläuft die gedachte Mittenlängsachse 26 parallel zur Fahrtrichtung x.

In einem ersten Beispiel ist der Antrieb 22 mittelbar oder unmittelbar starr mit dem Scheinwerfergehäuse 4 verbunden und die Kompensationsvorrichtung 24 befindet sich entlang eines mechanischen Wirkpfades zwischen dem Antrieb 22 und dem Lichtmodulrahmen 12. Zu einer Leuchtweiteneinstellung wird der Antrieb 22 angesteuert und bewegt mittels der Kompensationsvorrichtung 24 den Lichtmodulrahmen 12. Die Kompensationsvorrichtung 24 ist Teil eines Kraftübertragungsabschnitts und damit Teil des Getriebes zwischen dem Lichtmodulrahmen 12 und dem Antrieb 22.

In einem zweiten Beispiel ist die Kompensationsvorrichtung 24 mittelbar oder unmittelbar starr mit dem Scheinwerfergehäuse 4 zur einen Seite und mittelbar oder unmittelbar starr mit dem Antrieb 22 verbunden.

Die Kompensationsvorrichtung 24 korrigiert die Rotationsposition des Lichtmodulrahmens 12, welche durch ein von dem Antrieb 22 in den Lichtmodulrahmen 12 eingeleitetes Moment eingestellt wird.

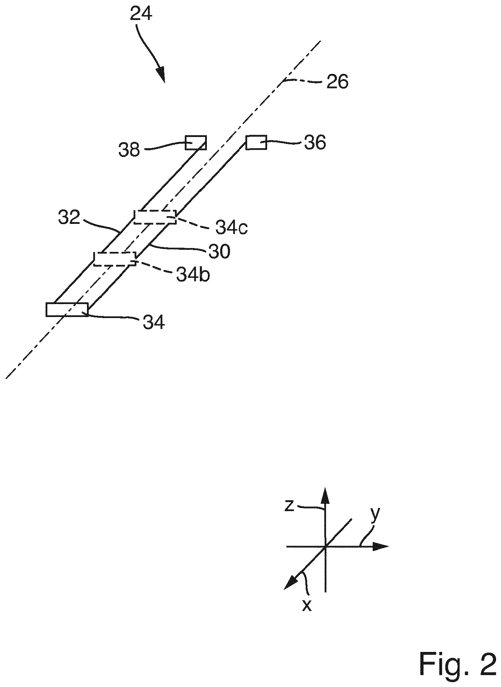

Figur 2 zeigt in schematischer Form die Kompensationseinrichtung 24 mit einem ersten Kompensationsabschnitt 30 und einem zweiten Kompensationsabschnitt 32, welche voneinander unterschiedliche Temperaturausdehnungskoeffizienten aufweisen und beispielsweise parallel zueinander angeordnet sind. Selbstverständlich können die beiden Kompensationsabschnitte 30 und 32 auch nicht parallel zueinander angeordnet sein, weisen dann aber zueinander parallele Wirkrichtungen auf.

Der erste und der zweite Kompensationsabschnitt 30, 32 sind in einem distalen Verbindungsabschnitt 34 miteinander verbunden. In proximaler Richtung weist der erste Kompensationsabschnitt einen ersten proximalen Verbindungsabschnitt 36 auf, welcher den ersten Kompensationsabschnitt 30 mit dem Antrieb verbindet. Der zweite Kompensationsabschnitt 32 weist einen zweiten proximalen Verbindungsabschnitt 38 auf, welcher den zweiten Kompensationsabschnitt 32 mit dem Lichtmodulrahmen 12 verbindet. Durch die unterschiedlichen Temperaturausdehnungskoeffizienten der beiden Kompensationsabschnitte 30 und 32 verschieben sich die Verbindungsabschnitte 36 und 38 entlang der Mittenlängsachse 26 zueinander. Um diese Verschiebung in Abhängigkeit von der Temperatur in einem Fertigungsschritt zu berücksichtigen weisen die beiden

Kompensationsabschnitte 30 und 32 zueinander korrespondierende Bereiche zur Herstellung eines jeweiligen distalen Verbindungsabschnitts 34b und 34c auf.

Durch die unterschiedlichen Kontraktions- bzw. Expansionslängen der beiden Kompensationsabschnitte 30, 32, welche sich parallel zur Mittenlängsachse 26 bei einer jeweiligen Temperatur ergeben, werden die proximalen Verbindungsabschnitt 36 entlang der Mittenlängsachse 26 so zueinander verschoben, dass sich die Korrektur der Rotationsposition des Lichtmodulrahmens 12 ergibt.

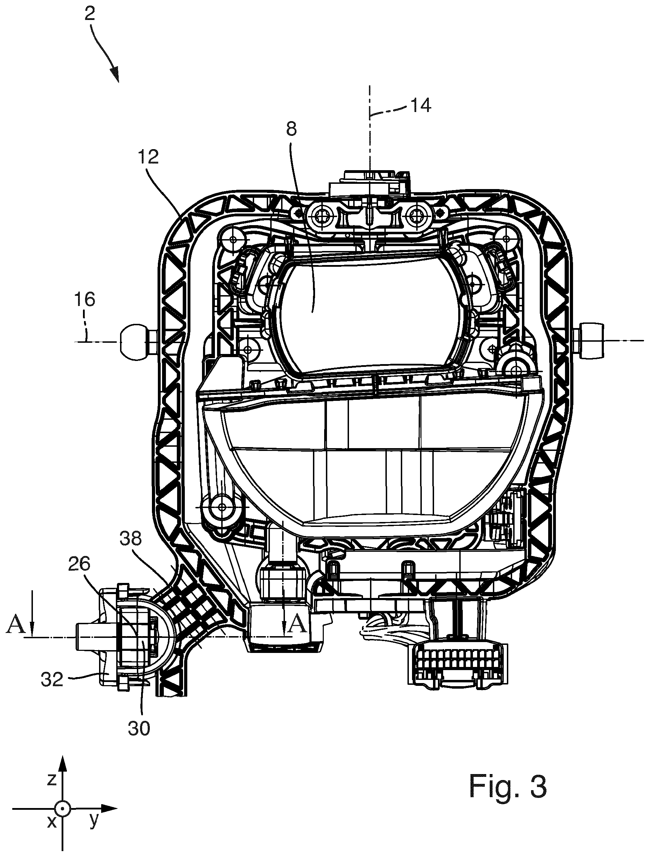

Figur 3 zeigt eine Sicht auf den Scheinwerfer 2 entgegen der Fahrtrichtung x. Im vorliegenden Beispiel ist auch eine Kurvenlichtfunktion realisiert, um das Lichtmodul 8 um die Kurvenlichtachse 14 zu rotieren.

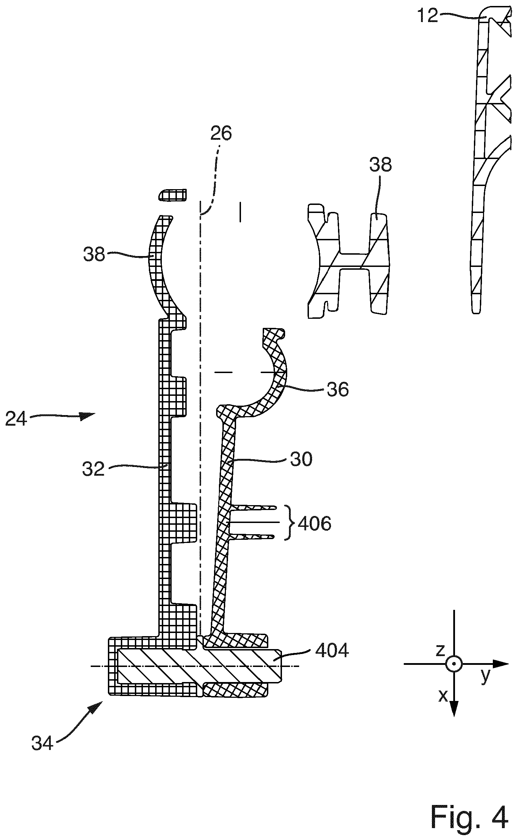

Figur 4 zeigt einen schematischen Schnitt A-A aus Figur 3. In dem distalen Verbindungsabschnitt 34 ist ein Bolzen 404 eingebracht, um die beiden Kompensationsabschnitte 30 und 32 miteinander zu verbinden. Es ist ein Bereich 406 gezeigt, in dem die beiden Kompensationsabschnitte 30 und 32 ebenfalls mit einander verbindbar sind, um die Temperaturkompensation der temperaturbedingten Verschiebung der Hell-Dunkel-Grenze in vertikaler Richtung zu erreichen.

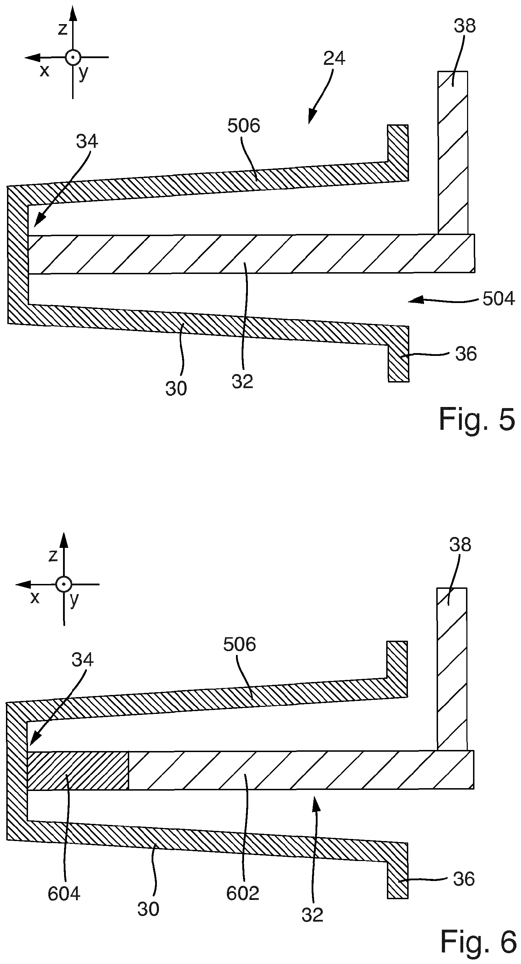

Figur 5 zeigt einen schematischen Schnitt einer nicht erfindungsgemäßen Ausführungsform der Kompensationsvorrichtung 24. In diesem Beispiel ist die Kompensationsvorrichtung 24 zwischen dem Antrieb 22 und dem Lichtmodulrahmen 12 angeordnet. Hierbei ragt der zweite Kompensationsabschnitt 32 in eine Ausnehmung 504 einer im Schnitt becher-förmigen Aufnahme 506 hinein, wobei der erste Kompensationsabschnitt 30 Teil der becher-förmigen Aufnahme 506 ist.

Figur 6 zeigt einen schematischen Schnitt einer erfindungsgemäßen Ausführungsform der Kompensationsvorrichtung 24. Im Unterschied zu Figur 5 ist der zweite Kompensationsabschnitt 32 mehrteilig aufgebaut und umfasst einen ersten Unterabschnitt 602 und einen zweiten Unterabschnitt 604, wobei beide Unterabschnitte einen voneinander unterschiedlichen Temperaturausdehnungskoeffizienten aufweisen.

## Patentansprüche

1. Ein Scheinwerfer (2) für ein Kraftfahrzeug, wobei der Scheinwerfer (2) umfasst:
ein Scheinwerfergehäuse (4);
ein Lichtmodul (8) zur Erzeugung einer Abstrahllichtverteilung (10), insbesondere einer Abblendlichtverteilung umfassend eine Hell-Dunkel-Grenze;
einen Lichtmodulrahmen (12), an welchem das Lichtmodul (8) starr oder um eine Kurvenlichtachse (14) rotierbar festgelegt ist, und welcher um eine Leuchtweitenachse (16) rotierbar zu dem Scheinwerfergehäuse (4) festgelegt ist;
eine zu dem Scheinwerfergehäuse (4) starr festgelegte Leuchtweiteneinstellvorrichtung (20) mit einem Antrieb (22) zur Einstellung einer Rotationsposition des Lichtmodulrahmens (12) um die Leuchtweitenachse (16) und mit einer Kompensationsvorrichtung (24),
**dadurch gekennzeichnet, dass** die
Kompensationseinrichtung temperaturabhängig die Rotationsposition des Lichtmodulrahmens (12) korrigiert,
wobei die Kompensationsvorrichtung (20) umfasst:
einen ersten Kompensationsabschnitt (30) mit einem ersten Temperaturausdehnungskoeffizienten, und
einen zweiten Kompensationsabschnitt (32) mit einem zweiten von dem ersten Temperaturausdehnungskoeffizienten unterschiedlichen Temperaturausdehnungskoeffizienten,
wobei ein distaler Verbindungsabschnitt (34) den ersten und den zweiten Kompensationsabschnitt (30, 32) miteinander verbindet,
der erste und/oder der zweite Kompensationsabschnitt (32) Unterabschnitte (602, 604) mit voneinander unterschiedlichen Temperaturausdehnungskoeffizienten aufweist.

2. Der Scheinwerfer (2) nach dem Anspruch 1, wobei die Kompensationsvorrichtung (24) in einem Kraftübertragungsabschnitt zwischen dem Lichtmodulrahmen (12) und dem Antrieb (22) angeordnet ist.

3. Der Scheinwerfer (2) nach Anspruch 1 oder 2, wobei die beiden Kompensationsabschnitte (30, 32) entweder
- parallel zueinander angeordnet sind oder
- nicht parallel zueinander angeordnet sind und zueinander parallele Wirkrichtungen aufweisen.

4. Der Scheinwerfer (2) nach einem der Ansprüche 1 bis 3, wobei der erste und der zweite Kompensationsabschnitt (30, 32) entlang einer Mittenlängsachse (26) der Kompensationsvorrichtung (20) zueinander korrespondierende Bereiche zur Herstellung des distalen Verbindungsabschnitts (34) aufweisen.

5. Der Scheinwerfer (2) nach einem der Ansprüche 1 bis 4, wobei in dem distalen Verbindungsabschnitt (34) ein Bolzen (404) eingebracht ist, um die beiden Kompensationsabschnitte (30 und 32) miteinander zu verbinden.

6. Der Scheinwerfer (2) nach einem der Ansprüche 2 bis 5, wobei ein erster proximaler Verbindungsabschnitt (36) den ersten Kompensationsabschnitt (30) mit dem Antrieb (22) verbindet, und wobei ein zweiter proximaler Verbindungsabschnitt (38) den zweiten Kompensationsabschnitt (32) mit dem Lichtmodulrahmen (12) verbindet.

7. Der Scheinwerfer (2) nach einem der Ansprüche 1 bis 6, wobei die gedachte Mittenlängsachse (26) der Kompensationsvorrichtung (20) zumindest abschnittsweise entlang einer gedachten Tangente verläuft, wobei die gedachte Tangente eine gedachte Kreiszylindermantelfläche (28) mit der Leuchtweitenachse (16) als Zylinderachse berührt.

## Claims

1. Headlamp (2) for a motor vehicle, wherein the headlamp (2) comprises:
a headlamp housing (4);
a light module (8) for generating an emission light distribution (10), in particular a dipped beam distribution comprising a light-dark boundary;
a light module frame (12) on which the light module (8) is fixed rigidly or so as to be rotatable about a bending-light axis (14), and which is fixed to the headlamp housing (4) so as to be rotatable about a headlamp range axis (16);
a headlamp range adjusting device (20) which is rigidly fixed to the headlamp housing (4) and has a drive system (22) for setting a rotational position of the light module frame (12) about the headlamp range axis (16) and has a compensation device (24),
**characterized in that** the compensation device corrects the rotational position of the light module frame (12) depending on temperature,
wherein the compensation device (20) comprises:
a first compensation portion (30) having a first temperature expansion coefficient and a second compensation portion (32) having a second temperature expansion coefficient different from the first temperature expansion coefficient,
wherein a distal connecting portion (34) connects the first and the second compensation portion (30, 32) to one another,
the first and/or the second compensation portion (32) has sub-portions (602, 604) having different temperature expansion coefficients.

2. Headlamp (2) according to claim 1, wherein the compensation device (24) is arranged in a force transmission portion between the light module frame (12) and the drive system (22).

3. Headlamp (2) according to claim 1 or claim 2, wherein the two compensation portions (30, 32) either
- are arranged in parallel with one another, or
- are not arranged in parallel with one another and have mutually parallel directions of action.

4. Headlamp (2) according to any of claims 1 to 3, wherein the first and the second compensation portion (30, 32) have regions corresponding to one another for producing the distal connecting portion (34) along a central longitudinal axis (26) of the compensation device (20).

5. Headlamp (2) according to any of claims 1 to 4, wherein a bolt (404) is introduced into the distal connecting portion (34) in order to connect the two compensation portions (30 and 32) to one another.

6. Headlamp (2) according to any of claims 2 to 5, wherein a first proximal connecting portion (36) connects the first compensation portion (30) to the drive system (22), and wherein a second proximal connecting portion (38) connects the second compensation portion (32) to the light module frame (12).

7. Headlamp (2) according to any of claims 1 to 6, wherein the imaginary central longitudinal axis (26) of the compensation device (20) runs at least partially along an imaginary tangent, wherein the imaginary tangent touches an imaginary circular cylinder surface (28) with the headlight range axis (16) as a cylinder axis.

## Revendications

1. Projecteur (2) pour un véhicule à moteur, dans lequel le projecteur (2) comprend:
un boîtier de projecteur (4);
un module d'éclairage (8) pour générer une distribution de lumière rayonnée (10), en particulier une distribution de feux de croisement comprenant une limite obscurité-clarté;
un cadre de module d'éclairage (12), sur lequel le module d'éclairage (8) est fixé rigidement ou de manière à pouvoir tourner autour d'un axe de feu de virage (14), et lequel est fixé par rapport au boîtier de projecteur (4) de manière à pouvoir tourner autour d'un axe de portée d'éclairage (16);
un dispositif de réglage de portée d'éclairage (20) fixé rigidement par rapport au boîtier de projecteur (4) avec un entraînement (22) pour régler une position de rotation du cadre de module d'éclairage (12) autour de l'axe de portée d'éclairage (16) et avec un dispositif de compensation (24), **caractérisé en ce que** le système de compensation corrige la position de rotation du cadre de module d'éclairage (12) en fonction de la température,
dans lequel le dispositif de compensation (20) comprend:
une première section de compensation (30) avec un premier coefficient de dilatation thermique, et
une deuxième section de compensation (32) avec un deuxième coefficient de dilatation thermique différent du premier coefficient de dilatation thermique,
dans lequel une partie de liaison distale (34) relie la première et la deuxième partie de compensation (30, 32),
dans lequel la première et/ou la deuxième section de compensation (32) comprend des sous-sections (602, 604) avec des coefficients de dilatation thermique différents les uns des autres.

2. Projecteur (2) selon la revendication 1, dans lequel le dispositif de compensation (24) est disposé dans une section de transmission de force entre le cadre de module d'éclairage (12) et l'entraînement (22).

3. Projecteur (2) selon la revendication 1 ou 2, dans lequel les deux sections de compensation (30, 32) soit
- sont disposées parallèlement l'une à l'autre, soit
- ne sont pas disposées parallèlement l'une à l'autre et présentent des directions d'action parallèles les unes aux autres.

4. Projecteur (2) selon l'une quelconque des revendications 1 à 3, dans lequel la première et la deuxième section de compensation (30, 32) présentent des zones correspondant l'une à l'autre le long d'un axe longitudinal médian (26) du dispositif de compensation (20) pour la réalisation de la section de liaison distale (34).

5. Projecteur (2) selon l'une quelconque des revendications 1 à 4, dans lequel un boulon (404) est introduit dans la section de liaison distale (34) pour relier les deux sections de compensation (30 et 32) l'une à l'autre.

6. Projecteur (2) selon l'une quelconque des revendications 2 à 5, dans lequel une première partie de liaison proximale (36) relie la première partie de compensation (30) à l'entraînement (22), et dans lequel une deuxième section de liaison proximale (38) relie la deuxième section de compensation (32) au cadre de module d'éclairage (12).

7. Projecteur (2) selon l'une quelconque des revendications 1 à 6, dans lequel l'axe longitudinal médian (26) imaginaire du dispositif de compensation (20) s'étend au moins sur certaines sections le long d'une tangente imaginaire, dans lequel la tangente imaginaire touche une surface d'enveloppe cylindrique circulaire imaginaire (28) avec l'axe de portée d'éclairage (16) comme axe de cylindre.
